# EUROPEAN PATENT APPLICATION

(11) **EP 3 764 743 A1**
(43) Date of publication of application: **13.01.2021**
(21) Application number: 19763562.6
(22) Date of filing: 18.02.2019
(51) Int. Cl.: H05B 33/08

(54) **LIGHTING CONTROL APPARATUS**

(30) Priority: 09.03.2018 KR 20180027909; 27.03.2018 KR 20180034944
(71) Applicant: LG Innotek Co., Ltd., Seoul 07796 (KR)
(72) Inventor: YOON, Dong Keun, Seoul 07796 (KR); LEE, Dong Soo, Seoul 07796 (KR)
(74) Representative: M. Zardi & Co S.A.
(86) International application number: PCT/KR2019/001900
(87) International publication number: WO 2019/172551

(57) **Abstract**

A lighting control apparatus according to an embodiment may comprise: a power supply unit; a rectification unit for rectifying power output from the power supply unit; a conversion unit for converting the rectified power output from the rectification unit so as to output the converted power to a light source; a control unit for controlling an output of the conversion unit; and a reduction unit connected to an output terminal of the rectification unit so as to reduce a level of the rectified power and output same to the control unit, wherein the conversion unit comprises a switch connected to the control unit and a first inductor connected to the rectification unit, and the reduction unit comprises a second inductor connected through a magnetic flux to the first inductor.

## Description

### [Technical Field]

Embodiments relate to a lighting control apparatus for reducing standby power consumption.

### [Background Art]

A light-emitting diode (LED) is a kind of semiconductor device that converts electrical energy into light. The LED has advantages of low power consumption, semi-permanent life-span, fast response speed, safety, and environmental friendliness compared to conventional light sources such as a fluorescent, an incandescent lamp, and the like. In particular, an LED lighting device may perform various effects by controlling blinking order, emission color, brightness, and the like of LEDs installed to be arranged in plural.

Accordingly, many researches have been conducted to replace conventional light sources with light-emitting diodes, and the light-emitting diodes tend to be increasingly used as light sources for lighting devices such as various lamps used indoors and outdoors, liquid crystal displays, lighting boards, and street lights. In particular, they are used as a general lighting of interiors, stage lighting for creating a specific atmosphere, advertising lighting, and landscape lighting.

The lighting device may be installed on an exterior wall of a building, a park, a street light, a parapet of a bridge, or a performance hall as a landscape lighting, but its size and application system may vary depending on an application, an object, or a location to be applied. That is, the lighting device for the exterior wall of a building is used by simply displaying with a blinking function in a band shape on the exterior wall of the building or in a single color or a combination of colors, and the lighting device for parks, street lights, parapets of bridges, etc. is irregularly installed according to a shape of an object to be used by changing blinking or colors.

Conventional lighting control apparatuses have used a total harmonic distortion (THD) elimination circuit for removing harmonics between a voltage obtained by rectifying an input voltage and a power factor correction (PFC) control circuit. Although a resistor having a large resistance value is used as the THD elimination circuit, power loss is always generated in the resistor while the input voltage is applied, and thus there is a problem that standby power consumption and decrease in operation efficiency are generated.

In addition, the conventional lighting control apparatus includes a driving driver for driving an LED module, a sensor for sensing an external object, and a dimming controller for controlling a dimming signal of the LED module by a sensing value sensed from the sensor.

When an external object is sensed, the conventional lighting device should operate the sensor and the dimming controller to control the LED module, and thus the sensor unit and the dimming controller should always be activated. Accordingly, standby power consumption is significantly increased.

### [Technical Problem]

An object of an embodiment is to provide a lighting control apparatus for minimizing standby power consumption.

In addition, another object of the embodiment is to provide a lighting control apparatus for improving operation efficiency.

### [Technical Solution]

A lighting control apparatus of an embodiment may include a power supply unit, a rectification unit for rectifying power output from the power supply unit, a conversion unit for converting the rectified power output from the rectification unit to output the converted power to a light source, a control unit for controlling an output of the conversion unit, and a reduction unit connected to an output terminal of the rectification unit to down a level of the rectified power and output the rectified power to the control unit, wherein the conversion unit may include a switch connected to the control unit and a first inductor connected to the rectification unit, and the reduction unit may include a second inductor that is magnetic-flux coupled to the first inductor.

### [Advantageous Effects]

In an embodiment, a reduction unit is configured to a first inductor and a second inductor, and accordingly, there is an effect that may eliminate power loss occurring in the THD circuit unit by preventing power from being supplied to a THD circuit unit in a standby mode.

In addition, in the embodiment, an input level is downed by the first inductor and the second inductor, and accordingly, there is an effect that may improve operation efficiency by effectively controlling turn-on and turn-off times of a switch.

In addition, in the embodiment, there is an effect that may reduce a failure rate of a component by using a second resistor having a low resistance value.

In addition, in the embodiment, power is switched according to a dimming operation mode and standby mode, and accordingly, there is an effect that may effectively prevent power loss occurring during the standby mode.

In addition, in the embodiment, a sensing detection unit is designed with a simple structure composed of a switch and a passive element, and accordingly, there is an effect that may effectively output a low signal generated from a sensor.

In addition, in the embodiment, there is an effect that may prevent signal distortion by controlling a bias current of a photo coupler.

### [Description of Drawings]

FIG. 1 is a block diagram showing a lighting control apparatus according to a first embodiment.
FIG. 2 is a circuit diagram showing the lighting control apparatus according to the first embodiment.
FIG. 3 is a waveform diagram showing a voltage waveform flowing to a reduction unit of the lighting control apparatus according to the first embodiment.
FIG. 4 is a flowchart showing a state in which a current of the lighting control apparatus according to the first embodiment is supplied to a control unit.
FIG. 5 is a waveform diagram showing a state at a time point at which a switch is turned on and turned off according to an input power.
FIG. 6 is a graph comparing an input power according to the first embodiment and a conventional input power.
FIG. 7 is a circuit diagram showing a lighting control apparatus according to a second embodiment.
FIGS. 8 and 9 are circuit diagrams for describing an operation of a power switching unit of the lighting control apparatus according to the second embodiment.
FIG. 10 is a circuit diagram for describing an operation of a sensing detection unit of the lighting control apparatus according to the second embodiment.
FIGS. 11 and 12 are circuit diagrams for describing an operation of a bias current control unit of the lighting control apparatus according to the second embodiment.
FIG. 13 is a view showing waveforms in an operation mode and a standby mode of a current control unit.

### [Modes of the Invention]

The following embodiments are provided as examples in order to sufficiently convey the spirit of the present invention to those skilled in the art to which the present invention pertains. Therefore, the present invention is not limited to the embodiments described below and may be embodied in other forms. Like reference numbers indicate like elements throughout the specification.

Advantages and features of the present invention, and methods for achieving them will be apparent with reference to the embodiments described below in detail in conjunction with the accompanying drawings. However, the present invention is not limited to the embodiments disclosed below, but may be implemented in various different forms. In addition, the embodiments merely are provided for making the disclosure of the present invention complete, and for notifying completely the scope of the invention to those skilled in the art. Further, the present invention is only defined by the scope of the claims. Like reference numerals refer to like elements throughout the specification.

In describing the embodiments of the present disclosure, when it is determined that a detailed description of a well-known function or configuration may unnecessarily obscure the gist of the present disclosure, the detailed description thereof will be omitted. Terms to be described below are terms defined in consideration of functions in the embodiments of the present invention, and may vary according to intentions or customs of users or operators. Therefore, the definition should be made based on the contents throughout the specification.

The spatially relative terms "under, below, beneath", "lower", "on, above", "upper", and the like may be used to easily describe the correlation of one element, elements different from components, or components, as shown in the drawings. The spatially relative terms should be understood as terms that include different directions of the device when in use or operation in addition to the directions shown in the drawings. For example, when inverting an element shown in the drawing, an element described as "below" or "beneath" of another element may be placed "above" of another element. Thus, the exemplary term "below" may include both of direction of above and below.

The terms used in the specification are for describing embodiments, and therefore, are not intended to be limit the present invention. In the specification, the singular forms also include the plural forms unless specifically stated in the phrase. As used herein, "comprise" and/or "comprising" does not exclude the presence or addition of the mentioned component, step, operation and/or element, one or more other components, steps, operations and/or elements.

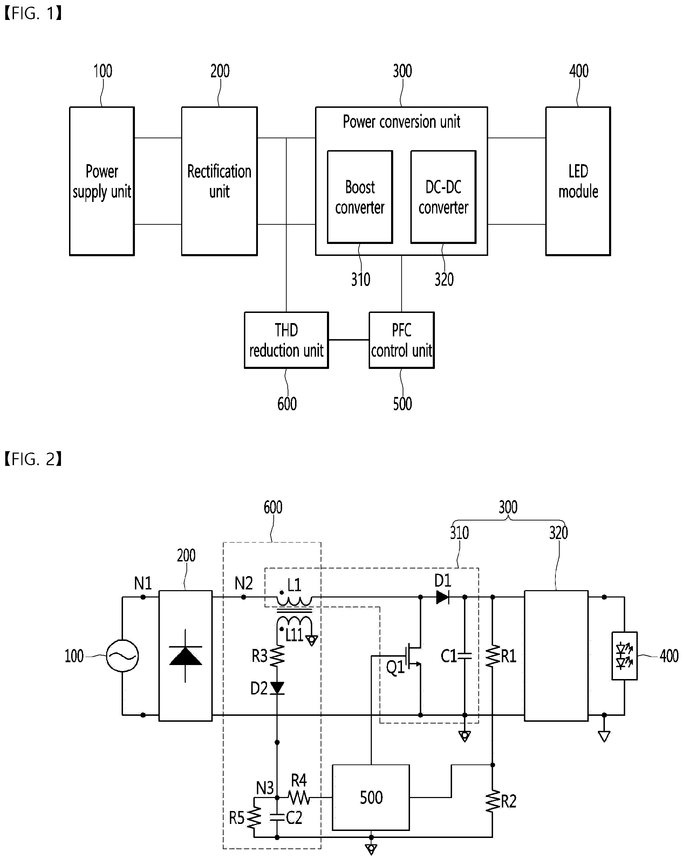

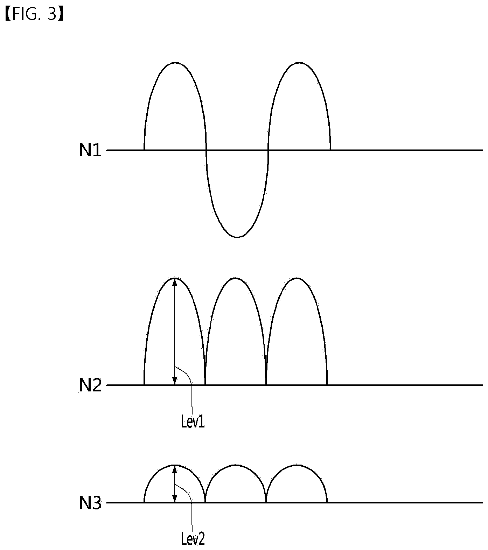

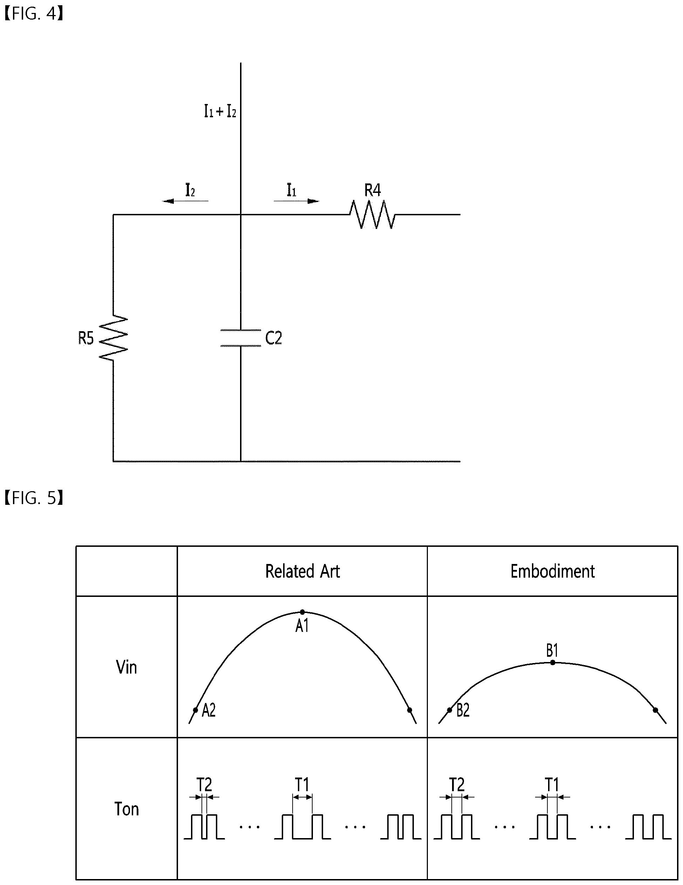

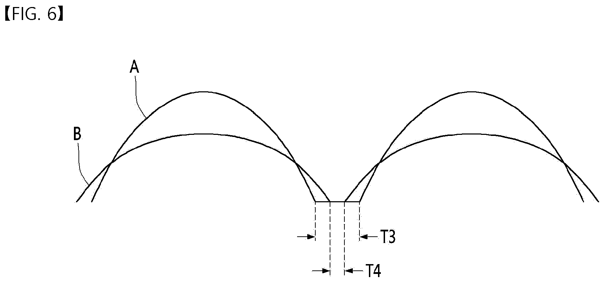

FIG. 1 is a block diagram showing a lighting control apparatus according to a first embodiment, FIG. 2 is a circuit diagram showing the lighting control apparatus according to the first embodiment, FIG. 3 is a waveform diagram showing a voltage waveform flowing to a reduction unit of the lighting control apparatus according to the first embodiment, FIG. 4 is a flowchart showing a state in which a current of the lighting control apparatus according to the first embodiment is supplied to a control unit, FIG. 5 is a waveform diagram showing a state at a time point at which a switch is turned on or turned off according to an input power, and FIG. 6 is a graph comparing an input power according to the first embodiment and a conventional input power.

Referring to FIGS. 1 and 2, a lighting control apparatus according to an embodiment may include a power supply unit 100, a rectification unit 200 rectifying power input from the power supply unit 100, a conversion unit 300 converting the rectified power to output it to an LED module 400, a control unit 500 controlling an output value output from the conversion unit 300, and a reduction unit 600 supplying input power to the control unit 500 by downing a level of the input power.

The power supply unit 100 may generate AC power. The power supply unit 100 may supply an overall input power of a lighting device. The power supply unit 100 may serve as a supply power for various elements used in a power supply device. The input power input to the power supply unit 100 may be commercial power of 220V. In case of a commercial power of 220V, it may have a sine wave shape that alternates periodically between -311V and +311V. Since the AC power differs from country to country, the power supply unit 100 outputs an AC voltage of 100V to 250V, and a frequency of 50 Hz or 60 Hz may be used.

The rectification unit 200 serves to rectify AC power of the power supply unit 100. The rectification unit 200 may include a diode. The rectification unit 200 may include a bridge rectifier, but the embodiment is not limited thereto. The rectified power may be supplied to the conversion unit 300. At the same time, the rectified power may be supplied to the control unit 500.

Although not shown, an EMI filter unit (not shown) may be further disposed between the power supply unit 100 and the rectification unit 200.

The electromagnetic interference (EMI) filter unit may remove noise of the input power. When the input power is supplied from the power supply unit 100, electrical noise may be converted into a magnetic field, and electromagnetic interference (EMI) may be generated, which causes interference with other elements of the lighting control apparatus. The EMI filter unit may remove such a noise. The EMI filter unit may be configured by an inductor and/or a capacitor to remove EMI noise.

The conversion unit 300 may convert the input power into an output voltage for driving the LED module 400. The conversion unit 300 may include a boost converter 310 and a DC-DC converter 320. In addition, the conversion unit 300 may include a switch Q1 connected to the control unit 500.

The boost converter 310 may step up or down the input voltage. The boost converter 310 may be configured using a circuit including a first inductor L1 and a smoothing capacitor C1. The boost converter 310 may smooth, step up or down the rectified input power. The boost converter 310 may include a second diode D2 for blocking a current flowing from an output terminal. The DC-DC converter 320 may DC-DC convert the stepped up or down voltage to output. The DC-DC converter 320 may be configured as a DC-DC converter, but the embodiment is not limited thereto.

The LED module 400 may include a plurality of LEDs. The LEDs of the LED module 400 may emit light according to the DC power output from the conversion unit 300. The LED module 400 may include a plurality of LEDs connected in series, and several sets of the plurality of LEDs connected in series may be connected in parallel. The LED module 400 may include a red LED array, a green LED array, and a blue LED array, each of which may be connected in series or in parallel.

The control unit 500 may protect an output terminal of the conversion unit 300 from overvoltage by controlling turn-on or turn-off of the switch Q1 of the conversion unit 300, and may control an output of the conversion unit 300 to be a sine wave. Accordingly, a voltage waveform and a current waveform output from the conversion unit 300 may be set to have the same shape and phase to improve a power factor and perform a constant current control function.

The reduction unit 600 of the embodiment may be disposed between the rectification unit 200 and the control unit 500. The reduction unit 600 serves to reduce a harmonic content rate according to a high input voltage. At the same time, in a standby mode, power loss occurring in the reduction unit 600 may be reduced by controlling power generated in the reduction unit 600 to 0V.

As shown in FIG. 2, the reduction unit 600 may include second inductor L11 that is wound on one side of the first inductor L1 of the conversion unit 300 to be magnetic-flux coupled, a first resistor R3, a first diode. D1, a second capacitor C2, a second resistor R4, and a noise reduction unit R5.

The first resistor R3 may be connected in series with the second inductor L11, and the first diode D1 may be connected in series with the first resistor R3. The second capacitor C2 may be connected in series with the first diode D1, and the second resistor R4 may be branched between the first diode D1 and the second capacitor C2 to be connected to the control unit 500. The noise reduction unit R5 may be connected to both ends of the second capacitor C2. The noise reduction unit R5 may include a resistor.

The second inductor L11 may down a level of the power rectified from the rectification unit 200. To this end, a winding ratio of the first inductor L1 and the second inductor L11 may be adjusted. The second inductor L11 may be formed to have a winding ratio of 1/2 to 1/10 of the first inductor L1. Accordingly, the rectified power may be downed to a level of 1/10 thereof. When the level-downed power is used as an input power of the control unit 500, the harmonic content rate may be further reduced.

The first resistor R3 serves to remove unnecessary resonance. A resistance value of the first resistor R3 may be determined appropriately. The first diode D1 may serve to block a negative component of the level-downed power. The level-downed power may be measured at the both ends of the second capacitor C2.

The second resistor R4 serves to limit a current so as to supply the input power to the control unit 500. A resistance value of the second resistor R4 may be determined appropriately according to an input value of the control unit 500. The noise reduction unit R5 may discharge a current value except for the current value supplied to the control unit 500.

As shown in FIG. 3, AC power output from the power supply unit 100 may be measured at a first node N1. At a second node N2, after the AC power output from the power supply unit 100 is rectified, a power having a first level Lev1 may be measured. At a third node N3, a power having a second level Lev2 of which level is downed by the first inductor L1 and the second inductor L11 may be measured. The power having the second level Lev2 may be a power that is downed to 1/2 to 1/10 than the power having the first level Lev1.

As shown in FIG. 4, a first current I1 may be input to the control unit 500 by the second resistor R4 due to the level-downed power. On the other hand, a second current I2 may flow to the noise reduction unit R5. That is, the noise reduction unit R5 may discharge the second current I2 which is the remaining current other than the first current I1.

In the related art, since the rectified power output from the power supply unit 100 is considerably large, the reduction unit 600 supplied an input voltage to the control unit 600 using a considerably large resistance. On the other hand, in the embodiment, the resistance value of the second resistor R4 may be downed by significantly downing a level of the rectified power and using the noise reduction unit R5. Accordingly, there is an effect that may reduce a cost of the second resistor R4.

In addition, in the related art, there was a disadvantage that a failure rate of a component is high by using a considerably large resistance in the reduction unit 600. In the embodiment, there is an effect that may reduce a failure rate of a component by using resistors having a small value.

Hereinafter, an operation of the reduction unit in an operation mode and a standby mode of the lighting control apparatus will be described.

As shown in FIG. 2, in the operation mode of the lighting control apparatus, the power output from the power supply unit 100 is output as AC power with a sine wave shape. Thereafter, the sine wave shaped AC power is rectified via the rectification unit 200.

The rectified power is output as a power having a level downed to 1/2 to 1/10 via the second inductor L11. The level-downed power is applied to the second capacitor C2 while unnecessary resonance and a negative component are blocked, and the input power is supplied to the control unit 500 by the second resistor R4.

At this time, since the reduction unit 600 supplies a power of low level, the control unit 500 may effectively control turn-on and turn-off times of the switch Q1 of the conversion unit 300.

As shown in FIG. 5, in the related art, since the level of the input voltage is considerably large, there was a problem that a turn-on time T1 of the switch Q1 is increased in a first region A1 which is a peak region of an input voltage Vin and a turn-off time T2 of the switch Q1 is short in a second region A2 which is a lower region of the input voltage Vin.

However, in the embodiment, since the level of the input voltage Vin is downed, there is an effect that may improve operation efficiency by decreasing the turn-on time T1 of the switch Q1 in the first region B1 which is the peak region of the input voltage Vin, and by increasing the turn-off time T2 of the switch Q1 in the second region B2 which is the lower region of the input voltage Vin.

In addition, as shown in FIG. 6, in the related art, a period in which a constant current does not flow between the rectified powers is generated because the turn-on and turn-off times are not effectively controlled.

However, in the embodiment, there is an effect that may significantly reduce a time T4 at which a current is cut off between pulse inputs as compared with a time T3 at which a current is cut off between pulse inputs in the related art by effectively controlling the turn-on and turn-off times.

In the standby mode of the lighting control apparatus, the switch Q1 of the conversion unit 300 may be turned off. Accordingly, since a pulse voltage is not applied to the first inductor L1, a voltage of both ends of the second inductor L11 may be 0V. Accordingly, since there is no voltage applied to all the components of the reduction unit 600, the power loss occurring in the reduction unit 600 becomes zero in the standby mode of the lighting control apparatus. At this time, when the switch Q1 is turned off, a separately provided power may be supplied to the conversion unit 300 and the LED module 400.

In the related art, power loss occurring in the power applied to the reduction unit 600 was about 100W, but the reduction unit 600 of the embodiment completely eliminates the power loss in the standby mode, and thus there is an effect that may reduce the power loss to 1/2 or less as compared with the related art.

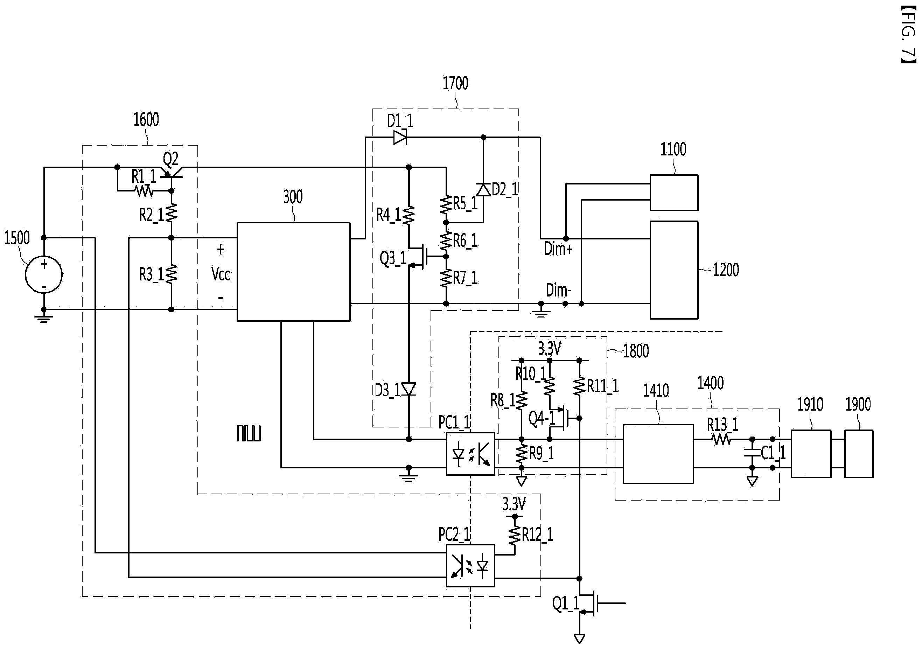

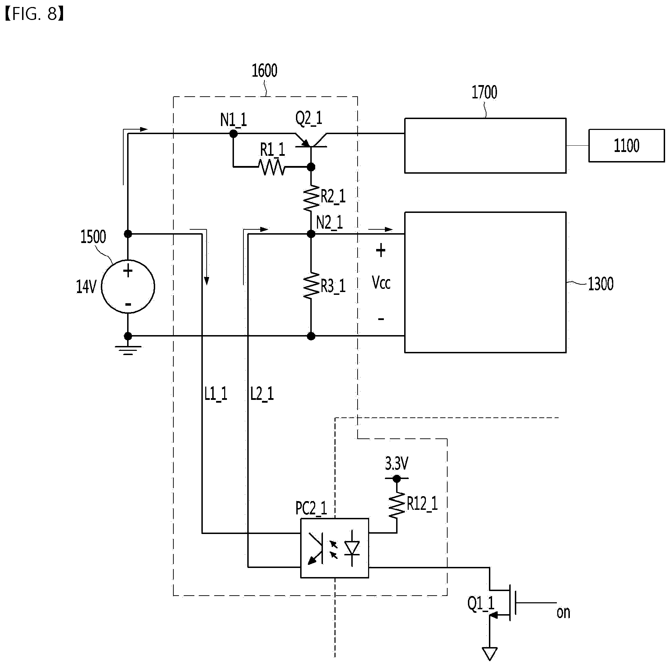

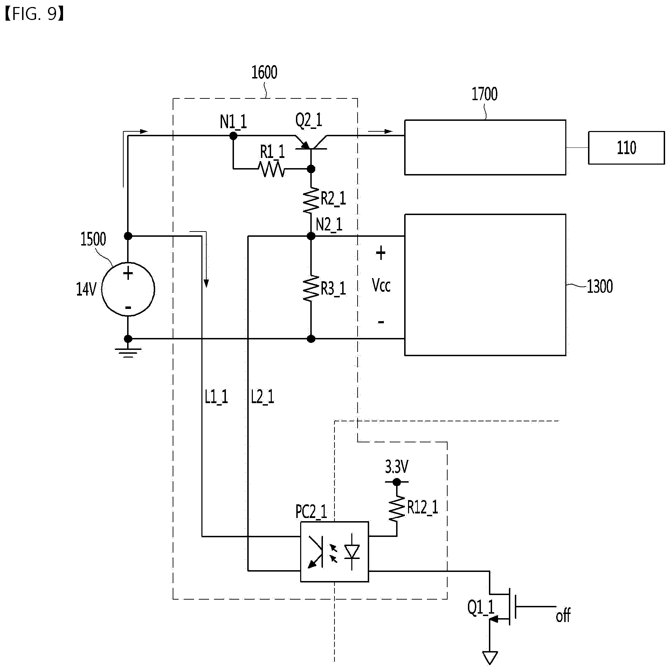

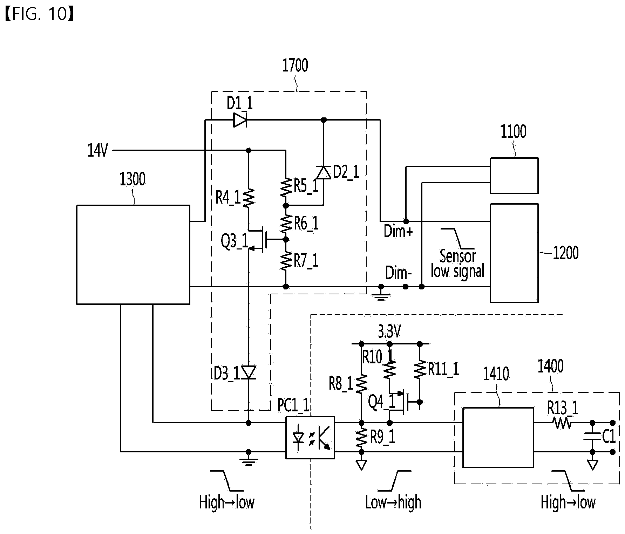

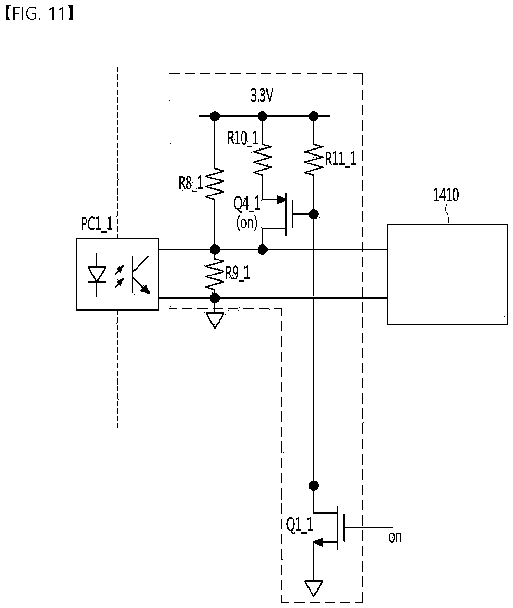

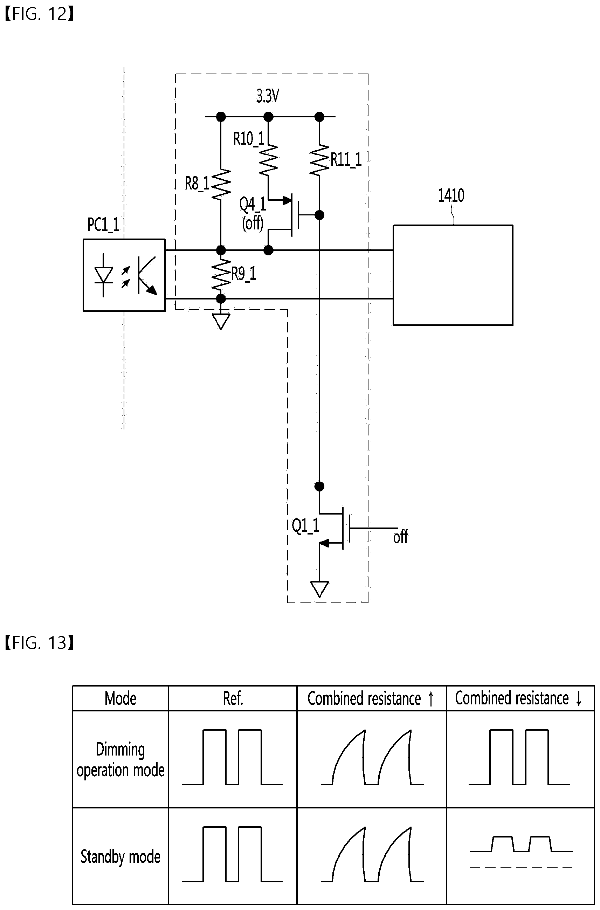

FIG. 7 is a circuit diagram showing a lighting control apparatus according to a second embodiment, FIGS. 8 and 9 are circuit diagrams for describing an operation of a power switching unit of the lighting control apparatus according to the second embodiment, FIG. 10 is a circuit diagram for describing an operation of a sensing detection unit of the lighting control apparatus according to the second embodiment, FIGS. 11 and 12 are circuit diagrams for describing an operation of a bias current control unit of the lighting control apparatus according to the second embodiment, and FIG. 13 is a view showing waveforms in an operation mode and a standby mode of a current control unit.

Referring to FIG. 7, the lighting control apparatus according to the embodiment may include a sensor unit 1100 for sensing an object, a PWM signal generator 1300 for generating a PWM input signal according to a signal sensed by the sensor unit 1100, a first photo coupler PC1_1 to which a signal output from the PWM signal generator 1300 is input, an output unit 1400 to which a signal output from the first photo coupler PC1_1 is input, a power supply unit 1500 for supplying power to the sensor unit 1100 and the PWM signal generator 1300, and a power switching unit 1600 for selectively supplying power to the PWM signal generator 1300 and the sensor unit 1100 according to a dimming operation signal.

The sensor unit 1100 is installed at an entrance in which people frequently go in and out, or at an entrance of a parking lot in which objects such as cars enter and exit, and serves to sense the entry or exit of people, cars, and the like at such an entrance or the entrance of the parking lot.

The sensor unit 1100 may be connected to (+) and (-) terminals of a dimmer 1200. The dimmer 1200 may adjust brightness of a LED module 1900. The dimmer 1200 may adjust the brightness according to the corresponding voltage by applying a voltage in a predetermined range to a LED driving driver 1910. Such a voltage range may use, for example, a voltage in a range of 0V to 10V. The dimmer 1200 may dim a lighting by inputting a DC voltage between 0V to 10V at a ratio of the input voltage to 10V, and a connection part thereof may be divided so as to have a polarity of a minus (-) input part and a plus (+) input part.

The PWM signal generator 1300 may generate a PWM signal for controlling dimming according to the signal sensed by the sensor unit 1100. The PWM signal generator 1300 may control a power level of driving power according to a brightness control signal of the dimmer. The PWM signal generator 1300 may be configured using an inductor, a capacitor, and the like.

The PWM signal output from the PWM signal generator 1300 may be input to the first photo coupler PC1_1. The first photo coupler PC1_1 may electrically insulate the PWM signal generator 1300 and the output unit 1400. Here, an output terminal of the first photo coupler PC1_1 may be configured to enable to convert a voltage of 0V to 10V into a voltage of 0V to 3.3V.

The first photo coupler PC1_1 is an element that couples an electric signal with light, and may be configured by a characteristic that a light-emitting diode which is a light-emitting part and a phototransistor which is a light receiving part are electrically insulated from each other. When a PWM input signal is input, light is emitted from the light-emitting diode and touches the phototransistor so that the phototransistor is electrically operated. Accordingly, a PWM output signal output from the phototransistor may be output to the LED driving driver 1900 via the output unit 1400.

The output unit 1400 may include a PWM signal inverting unit 1410, a thirteenth resistor R13_1, and a first capacitor C1_1. The sensor unit 1100 may be short-circuited so that a contact is normally opened and turned on when an object is sensed. Accordingly, when an external dimming signal is input from the sensor unit 1100, a strong dimming signal is normally input when there is no entry or exit of an object, and when there is an entry or exit of an object, a weak dimming signal is input and dimming control is performed in reverse. Therefore, in order to use the external dimming signal of the sensor unit 1100 as an input means as it is, it is necessary to invert the external dimming signal to be input and to provide it, and the PWM signal inverting unit 1410 may serve to invert a signal. The thirteenth resistor R13_1 and the first capacitor C1_1 may smooth and output the signal.

The LED driving driver 1910 may supply driving power to the LED module 1900 to control the brightness of the LED module 1900. To this end, the LED driving driver 1910 may include an EMI filter unit, a rectification unit, a power factor corrector, and a DC/DC conversion unit, which are not shown in the drawing.

The EMI filter unit may remove noise of an input power. When input power is supplied from the power supply unit 1500, electrical noise may be converted into a magnetic field, and EMI may be generated, which may interfere with other elements of the lighting control apparatus. The EMI filter unit may remove such noise. The EMI filter unit may be configured by an inductor and/or a capacitor to remove EMI noise.

The rectification unit serves to rectify AC power of the power supply unit 1500. The rectification unit may include a diode. The rectification unit may include a bridge rectifier, but the embodiment is not limited thereto. The rectified power may be supplied to the DC-DC conversion unit.

A power factor correction (PFC) control unit may protect an output terminal of the DC/DC conversion unit from overvoltage by controlling turn-on and turn-off of the switch of the DC/DC conversion unit, and may control an output of the DC/DC conversion unit to be a sine wave. Accordingly, a voltage waveform and a current waveform output from the DC/DC conversion unit may be set to have the same shape and phase to improve a power factor and perform a constant current control function.

The DC-DC conversion unit steps up or steps down power in order to drive the LED module 1900, and then may convert the power into DC power to supply to the LED module 1900.

The LED module 1900 may include a plurality of LEDs. The LEDs of the LED module 1900 may emit light according to the DC power output from the LED driving driver 1900. The LED module 1900 may include a plurality of LEDs connected in series, and several sets of the plurality of LEDs connected in series may be connected in parallel. The LED module 1900 may include a red LED array, a green LED array, and a blue LED array, each of which may be connected in series or in parallel.

The power supply unit 1500 may generate AC power. The power supply unit 1500 may supply an overall input power of the lighting control apparatus. The power supply unit 1500 may serve as a supply power for various elements used in a power supply device. The input power input to the power supply unit 1500 may be commercial power of 220V. In case of a commercial power of 220V, it may have a sine wave shape that alternates periodically between -311V and +311V. Since the AC power differs from country to country, the power supply unit 1500 outputs an AC voltage of 100V to 250V, and a frequency of 50 Hz or 60 Hz may be used.

In the embodiment, the power switching unit 1600 may be provided in order to reduce standby power consumption by selectively supplying power to the PWM signal generator operating in a dimming operation mode and the sensor unit operating in a standby mode.

The power supply unit 1500 may supply power to the sensor unit 1100, the PWM signal generator 1300, the LED driving driver 1910, etc. The power switching unit 1600 may selectively switch the power supplied to the PWM signal generator 1300 operating in the dimming operation mode and the sensor unit 1100 operating in the standby mode.

The power switching unit 1600 may selectively supply power by receiving a dimming operation signal. To this end, a first switch Q1_1 may be connected to the power switching unit 1600. The first switch Q1_1 may be turned on or turned off by the dimming operation signal. The first switch Q1_1 may provide an ON signal to the power switching unit 1600 in the dimming operation mode. The first switch Q1_1 may provide an OFF signal to the power switching unit 1600 in the standby mode. The first switch Q1_1 may include a MOSFET circuit.

The power switching unit 1600 may include a second photo coupler PC2_1 disposed between the power supply unit 1500 and the PWM signal generator 1300. The other side of the second photo coupler PC2_1 may be connected to the first switch Q1_1. The second photo coupler PC2_1 may supply or cut off power to the PWM signal generator 1300 by an on/off operation.

The power switching unit 1600 may include a second switch Q2_1. The second switch Q2_1 may be disposed between the power supply unit 1500 and a sensing detection unit 1700. One end of the second switch Q2_1 may be connected to the power supply unit 1500, and the other end of the second switch Q2_1 may be branched and connected between the second photo coupler PC2_1 and the PWM signal generator 1300. The second switch Q2_1 may include a BJT circuit. The second switch Q2_1 may be turned on or turned off by a potential difference between a base and an emitter.

A first resistor R1_1 may be connected between the emitter and the base of the second switch Q2_1, and the first resistor R1_1 may be connected between the base of the second switch Q2_1 and a second resistor R2_1. A third resistor R3_1 may be connected in series with the second resistor R2_1, and the PWM signal generator 1300 may be connected between the second resistor R2_1 and the third resistor R3_1, and to an end of the third resistor R3_1. When the second switch Q2_1 is turned on, power is supplied to the sensing detection unit 1700. When the second switch Q2_1 is turned off, the power is not supplied to the sensing detection unit 1700 and the sensor unit 1100.

As shown in FIG. 8, a high signal may be provided to the first switch Q1_1 in the dimming operation mode. The first switch Q1_1 may be turned on and a current may be supplied to the second photo coupler PC2_1. The second photo coupler PC2_1 may be turned on by the supplied current. Power generated by the power supply unit 1500 flows via a first line L1_1. The power flowing via the first line L1_1 flows to a second line L2_1 by the second photo coupler PC2_1. The power flowing via the second line L2_1 may be provided to the PWM signal generator 1300 to activate the PWM signal generator 1300.

On the other hand, since power flows to a first node N1_1 between the power supply unit 1500 and the second switch Q2_1, and the same power also flows to a second node N2_1 between the second photo coupler PC2_1 and the second switch Q2_1, a potential difference is not generated between the base and the emitter of the second switch Q2_1, so that the second switch Q2_1 may be turned off. Accordingly, the power supplied to the sensor unit 1100 may be cut off.

As shown in FIG. 9, a low signal may be provided to the first switch Q1_1 in the standby mode. The first switch Q1_1 may be turned off and the current may be blocked to the second photo coupler PC2_1. Accordingly, the second photo coupler PC2_1 may be turned off. The power generated by the power supply unit 1500 may be supplied via the first line L1_1, but the power does not flow in the second line L2_1 because the second photo coupler PC2_1 is turned off. Accordingly, the power is not supplied to the PWM signal generator 1300.

On the other hand, since the power flows to the first node N1_1 between the power supply unit 1500 and the second switch Q2_1 and no power flows to the second node N2_1, the potential difference is generated between the base and the emitter of the second switch Q2_1, so that the second switch Q2_1 may be turned on. Accordingly, the power may be supplied to the sensor unit 1100.

In the embodiment, power is switched according to the dimming operation mode and the standby mode, and accordingly, there is an effect that may effectively prevent power loss occurring during the standby mode. In the related art, power loss by the PWM signal generator in the standby mode was about 150mW, but in the embodiment, the power loss by the PWM signal generator is about 10mW in the standby mode, thereby minimizing the power loss.

Returning to FIG. 7, the lighting control apparatus according to the embodiment may further include a sensing detection unit 1700. The sensing detection unit 1700 may transmit a low signal generated from the sensor unit 1100 to the output unit when movement of an object is detected in the standby mode. In the related art, a signal is transmitted via the PWM signal generator, but in the embodiment, since power is not supplied to the PWM signal generator in the standby mode, the sensing detection unit 1700 according to the embodiment may be provided to easily output a sensing signal.

The sensing detection unit 1700 may include a third switch Q3_1 disposed between the sensor unit 1100 and the first photo coupler PC1_1. The third switch Q3_1 may be turned on by a high signal of the sensor unit 1100 in the standby mode, and may be turned off when the switch is switched to the low signal. The sensing detection unit 1700 may include a plurality of resistors and diodes for voltage distribution.

A first diode D1_1 may be disposed between (+) terminals of the PWM signal generator 1300 and the dimmer 200. A third diode D3_1 may be disposed at a source terminal of the third switch Q3_1, and the third diode D3_1 may be connected between the PWM signal generator 1300 and the first photo coupler PC1_1. A fourth resistor R4_1 may be connected to the power switching unit 1600 at a drain terminal of the third switch Q3_1. A seventh resistor R7_1 may be connected to a gate terminal of the third switch Q3_1. The seventh resistor R7_1 may be connected between (-) terminals of the PWM signal generator 1300 and the dimmer 1200. A fifth resistor R5_1 and a sixth resistor R6_1 may be disposed at the gate terminal of the third switch Q3_1. The sixth resistor R6_1 may be disposed between the fifth resistor R5_1 and the gate terminal of the third switch Q3_1. The fifth resistor R5_1 may be connected to the fourth resistor R4_1. A second diode D2_1 may be connected between (+) terminals of the first diode D1_1 and the dimmer 1200 by being branched between the fifth resistor R5_1 and the sixth resistor R6_1.

As shown in FIG. 10, since power of 14V is cut off in the dimming operation mode, both the second diode D2_1 and the third diode D3_1 may be turned off, and the sensing detection unit 1700 may also maintain a deactivated state.

In the standby mode, the power of 14V may be distributed to a voltage divided by a combined resistance of the fifth resistor R5_1, the sixth resistor R6_1, and the seventh resistor R7_1, which may turn on the second diode D2_1. Accordingly, the (+) and (-) terminals of the dimmer 1200 may be maintained at a voltage distributed at 14V. At this time, the sensor unit 1100 may maintain the high signal.

Since Vgs of the third switch Q3_1 is higher than Vth, the second diode D2_1 may maintain an on-state, and may be maintained to supply a current to the first photo coupler PC1_1 via the fourth resistor R4_1 and the third diode D3_1. A voltage of both ends of the first capacitor C1_1 of the output unit 1400 may maintain a high voltage.

When an object is sensed in the standby mode, the sensor unit 1100 may switch from the high signal to the low signal. At this time, voltages of the (+) and (-) terminals of the dimmer 1200 may be 3V or less by the sensor unit 1100. Since Vgs of the third switch Q3_1 becomes lower than Vth, the third switch Q3_1 may be turned off and the current supplied to the first photo coupler PC1_1 may be blocked.

Accordingly, the first photo coupler PC1_1 may be turned off, and an input of the PWM signal inverting unit 1410 may be changed from a low voltage to a high voltage. The high voltage may be changed to the low voltage by the PWM signal inverting unit 1410 so that the low voltage may be applied to the both ends of the first capacitor C1_1 of the output unit 1400.

In the lighting control apparatus according to the second embodiment, the sensing detection unit is designed with a simple structure composed of a switch and a passive element, and accordingly, it is possible to effectively output a low signal generated from a sensor.

Returning to FIG. 7, the lighting control apparatus according to the second embodiment may further include a bias current control unit 1800.

The bias current control unit 1800 may be disposed between the first photo coupler PC1_1 and the output unit 1400. The bias current control unit 1800 may change a bias current supplied to a collector of the PWM inversion signal unit 1410 and the first photo coupler PC1_1 according to the dimming operation mode or the standby mode.

When the bias current input to the first photo coupler PC1_1 is small, distortion of a signal may be severely generated in the dimming operation mode, and when the bias current is large, the off may not be performed in the standby mode.

To prevent this, the bias current control unit 1800 according to the embodiment may control so as to increase a current in the dimming operation mode and so as to reduce a current in the standby mode.

The bias current control unit 1800 may include a fourth switch Q4_1 connected to the first switch Q1_1. The fourth switch Q4_1 may be the MOSFET circuit. A gate terminal of the fourth switch Q4_1 may be connected to a source terminal of the first switch Q1_1. A drain terminal of the fourth switch Q4_1 may be branched and connected between the first photo coupler PC1_1 and the PWM signal inverting unit 1410.

A tenth resistor R10_1 and an eleventh resistor R11_1 may be connected between the gate terminal and a source terminal of the fourth switch Q4_1. One end of an eighth resistor R8_1 may be connected to the tenth resistor R10_1, and the other end of the eighth resistor R8_1 may be branched and connected between the first photo coupler PC1_1 and the PWM signal inverting unit 1410. A ninth resistor R9_1 may be connected to the eighth resistor R8_1 and may be connected between the first photo coupler PC1_1 and the PWM signal inverting unit 1410.

As shown in FIG. 11, in case of the dimming operation mode, the first switch Q1_1 may be turned on by a high signal, and 3.3V may be applied to both ends of the eleventh resistor R11_1. Since Vsg of the fourth switch Q4_1 is higher than Vth, the fourth switch Q4_1 may be turned on. At this time, the tenth resistor R10_1 and the eighth resistor R8_1 are connected in parallel, so that a combined resistance value of the two resistors becomes small. Accordingly, the bias current may be increased.

As shown in FIG. 12, in case of the standby mode, the first switch Q1_1 may be turned off by a low signal, and 0V may be applied to the both ends of the eleventh resistor R11_1. Since Vsg of the fourth switch Q4_1 is downed to be lower than Vth, the fourth switch Q4_1 may be turned off. At this time, the tenth resistor R10_1 and the eighth resistor R8_1 are separated, and a combined resistance value of the two resistors is increased to the tenth resistor R10_1. Accordingly, the bias current may be increased.

As shown in FIG. 13, in the dimming operation mode, when the combined resistance increases, signal distortion occurs. Accordingly, when the bias current control unit 800 according to the second embodiment reduces the combined resistance to increase the current during the dimming operation, it is possible to transmit a signal without signal distortion.

On the other hand, in the standby mode, when the combined resistance is small, a vertical width of the signal is narrowed, so that the OFF signal may not be generated. Accordingly, when the bias current control unit 1800 according to the embodiment increases the combined resistance value to reduce the current in the standby mode, it is possible to easily perform the on/off operation.

That is, the bias current control unit according to the second embodiment reduces the combined resistance to increase the current in the dimming operation mode, and increases the combined resistance to reduce the current in the standby mode, and accordingly, there is an effect that may effectively transmit a lighting control signal.

Those skilled in the art to which the present invention pertains will understand that the above-described present invention can be implemented in other specific forms without changing the technical spirit or essential features. Therefore, it should be understood that the embodiments described above are illustrative in all respects and not restrictive.

The scope of the present invention is shown by the following claims rather than the detailed description, and all changes or modifications derived from the meaning and scope of the claims and their equivalent concepts should be construed as being included in the scope of the present invention.

## Claims

1. A lighting control apparatus comprising:
a power supply unit;
a rectification unit for rectifying power output from the power supply unit;
a conversion unit for converting the rectified power output from the rectification unit to output the converted power to a light source;
a control unit for controlling an output of the conversion unit; and
a reduction unit connected to an output terminal of the rectification unit to down a level of the rectified power and output the rectified power to the control unit,
wherein the conversion unit includes a switch connected to the control unit and a first inductor connected to the rectification unit, and
the reduction unit includes a second inductor that is magnetic-flux coupled to the first inductor.

2. The lighting control apparatus of claim 1, wherein the rectified power is not applied to the control unit by the reduction unit when the switch is turned off, and
a voltage applied to the second inductor becomes zero when the switch is turned off.

3. The lighting control apparatus of claim 1, wherein the reduction unit includes a first resistor for removing a resonance of the rectified power that is down and a first diode for blocking a negative component of the power,
one end of the first resistor is connected to the second inductor, and the other end of the first resistor is connected to the first diode,
the reduction unit includes a noise reduction unit,
one end of the noise reduction unit is connected to the first diode,
the reduction unit includes a second resistor disposed between the noise reduction unit and the control unit,
the other end of the noise reduction unit is connected to a ground of the control unit, and
the noise reduction unit discharges the remaining power other than power applied to the second resistor.

4. The lighting control apparatus of claim 1, wherein the reduction unit downs the level of the rectified power to 1/2 to 1/10 or less,
the reduction unit controls a winding ratio of the first inductor and the second inductor to down the level of the rectified power, and
a voltage applied to the reduction unit is 0V when the switch is turned off.

5. A lighting control apparatus comprising:
a power supply unit;
a rectification unit connected to the power supply unit;
a conversion unit connected to the rectification unit;
a reduction unit that is magnetic-flux coupled to the rectification unit; and
a control unit disposed between the conversion unit and the reduction unit,
wherein the conversion unit includes a switch connected to the control unit, and
the reduction unit prevents a power output from the rectification unit from being applied to the control unit when the switch is turned off.

6. The lighting control apparatus of claim 5, wherein the reduction unit downs a level of the power output from the rectification unit when the switch is turned on.

7. A lighting control apparatus comprising:
a sensor unit for sensing an object;
a PWM signal generator for generating a PWM input signal according to a signal sensed by the sensor unit;
a first photo coupler to which a signal output from the PWM signal generator is input;
an output unit to which a signal output from the first photo coupler is input;
a power supply unit for supplying power to the sensor unit and the PWM signal generator; and
a power switching unit for selectively supplying power to the PWM signal generator and the sensor unit according to a dimming operation signal,
wherein the first photo coupler electrically insulates the PWM signal generator and the output unit.

8. The lighting control apparatus of claim 7, further comprising
a first switch for providing on-off signals to the power switching unit according to the dimming operation signal,
wherein the power switching unit is disposed between the power supply unit and the PWM signal generator, and the power switching unit includes a second photo coupler that is turned off so as to cut off power to the PWM signal generator when the first switch is turned off and a second switch branched between the second photo coupler and the PWM signal generator and disposed between the power supply unit and the sensor unit,
the second switch includes a BJT circuit, wherein the BJT circuit is turned on or turned off by a potential difference between a first node between the power supply unit and the BJT circuit and a second node between the second photo coupler and the PWM signal generator, and
the second switch is turned off when the first switch is turned on so that the power of the power supply unit is applied to the PWM signal generator.

9. The lighting control apparatus of claim 8, further comprising
a sensing detection unit for outputting a low signal generated by the sensor unit via the first photo coupler,
wherein the sensing detection unit is disposed between the sensor unit and the first photo coupler, and includes a third switch that is turned on by a high signal of the sensor unit when the first switch is turned off and is turned off when switched to a low signal.

10. The lighting control apparatus of claim 8, further comprising
a bias current control unit for controlling a bias current of the second photo coupler by the on-off signals of the first switch,
wherein the bias current control unit increases the bias current of the photo coupler when an on signal of the first switch is received, and decreases the bias current of the first photo coupler when an off signal of the first switch is received, and
the bias current control unit includes a MOSFET circuit, a fourth switch that is turned on or turned off according to the signal of the first switch, tenth and eleventh resistors connected in parallel between a gate terminal and a source terminal of the fourth switch, and an eighth resistor connected in parallel with the tenth resistor between a source terminal of the third switch and the first photo coupler.
